**Europäisches Patentamt**

**European Patent Office**

**Office européen des brevets**

(11) Veröffentlichungsnummer: **0 250 988**
**A2**

## (12) EUROPÄISCHE PATENTANMELDUNG

(21) Anmeldenummer: **87108505.6**

(22) Anmeldetag: **12.06.87**

(51) Int. Cl.⁴: **A01K 7/02**

(30) Priorität: **21.06.86 DE 3620878**

(43) Veröffentlichungstag der Anmeldung:
**07.01.88 Patentblatt 88/01**

(84) Benannte Vertragsstaaten:
**AT BE CH FR GB IT LI LU NL**

(71) Anmelder: **Hinterkopf, Adolf**
**Ringstrasse 17**
**D-7900 Ulm/Lehr(DE)**

(72) Erfinder: **Hinterkopf, Adolf**
**Ringstrasse 17**
**D-7900 Ulm/Lehr(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Tränkeinrichtung für Tiere, insbesondere für Kälber oder dgl.**

(57) Eine Tränkeinrichtung für Tiere, insbesondere Kälber oder dgl. weist ein Gefäß (1) mit einem Saugzapfen (7) sowie eine das Gefäß (1) in der Gebrauchsstellung zu halten vermögende Haltevorrichtung (10 bis 15) auf, die mit einer Wand (9) oder dgl. verbindbar ist. Das Gefäß (1), an den der Saugzapfen (7) festgelegt ist, ist um eine zumindest im wesentlichen horizontale Achse schwenkbar in der Haltevorrichtung (10 bis 15) gelagert und kann mittels einer lösbaren Feststellvorrichtung gegen ein Schwenken gesichert in der Gebrauchsstellung gehalten werden.

Fig. 1

## Tränkeinrichtung für Tiere, insbesondere für Kälber oder dgl.

Die Erfindung betrifft eine Tränkeinrichtung für Tiere, insbesondere Kälber oder dgl., welche die Merkmale des Oberbegriffs des Anspruches 1 aufweist.

Bei einer bekannten Tränkeinrichtung dieser Art (DE-OS 26 27 383) ist mittels der plattenförmigen Haltevorrichtung das hintere Ende des Saugzapfens, an das sich ein Schlauch anschließt, lösbar an einer Wand oder dgl. derart festlegbar, daß der Saugzapfen von dieser Wand absteht. Das andere Ende des Schlauches wird in einen Behälter, beispielsweise einen Eimer, eingetaucht. Man braucht deshalb für den Behälter eine Stellfläche. Außerdem ist eine zusätzliche Abstellfläche erforderlich, falls man den Behälter in gestürzter Position beispielsweise aus hygienischen Gründen nicht auf der üblichen Stellfläche abstellen kann. Schließlich ist auch für den Schlauch eine Ablage erforderlich, falls man diesen nicht auf den Boden legen will, solange das Gefäß nicht zur Aufnahme des Schlauches zur Verfügung steht.

Der Erfindung liegt die Aufgabe zugrunde, eine derartige Tränkeinrichtung zu verbessern. Diese Aufgabe löst eine Tränkeinrichtung mit den Merkmalen des Anspruches 1.

Da der Saugzapfen am Gefäß festgelegt ist, entfällt ein Schlauch und damit auch das Problem der Ablage eines solchen Schlauches. Die - schwenkbare Lagerung des Gefäßes in der Haltevorrichtung macht eine Stellfläche für das Gefäß überflüssig. Außerdem gestattet sie es, den eventuell übrig gebliebenen restlichen Inhalt durch eine Schwenkbewegung auszukippen, was die Handhabung vereinfacht und erleichtert. Dennoch befindet sich der Saugzapfen in der Gebrauchstellung in einer definierten, für das Erfassen durch das zu tränkende Tier optimalen Position, da das Gefäß und damit auch der Saugzapfen in der Gebrauchstellung mittels einer lösbaren Feststellvorrichtung gegen ein Schwenken gesichert ist.

Die Haltevorrichtung kann dabei auf der dem Tier zugewandten Seite der Wand oder dgl. vorgesehen sein. Vorteilhafterweise ist sie jedoch auf der dem Tier abgewandten Seite der Wand oder dgl. befestigt, damit das Tier das Gefäß nicht erreichen kann. In diesem Falle benötigt die Wand eine Aussparung, durch die hindurch sich der Saugzapfen erstrecken kann.

Bei einer bevorzugten Ausführungsform weist die Haltevorrichtung einen Bügel gemäß Anspruch 2 auf. Ein solcher Bügel ist sehr kostengünstig sowie raumsparend und ermöglicht eine gute Handhabung des Gefäßes.

Die für die schwenkbare Lagerung des Gefäßes erforderlichen Lagerzapfen könnten an den Schenkeln des Bügels vorgesehen sein. Vorteilhafter ist jedoch, die Lagerzapfen am Gefäß vorzusehen, zumal sie auch durch Abschnitte eines Tragbügels gebildet werden können, wie er beispielsweise bei Eimern üblich ist.

Für eine Festlegung des Gefäßes in der Gebrauchstellung mittels der Feststellvorrichtung ist eine Anlage des Gefäßes an der Wand oder am Bügel vorteilhaft. Eine besonders gute Anlage erhält man bei einem im Querschnitt runden Gefäß, zum Beispiel einem Eimer, dann, wenn dieses Gefäß einen ebenen Wandbereich aufweist. Es genügt aber auch eine kleinflächige Anlage, wie man sie bei Verwendung eines üblichen Eimers erhält.

Der Bügel der Haltevorrichtung besteht vorzugsweise aus einer hochkant angeordneten metallischen Schiene. Es genügt dann eine sehr geringe Materialdicke, so daß der Bügel aus Blech ausgestanzt werden kann. Dabei ist es vorteilhaft, den Bügel aus zwei spiegelbildlich gleichen, L-förmigen Teilen zusammenzusetzen.

Damit das Gefäß geschwenkt werden kann, ohne am Jochteil des Bügels oder an der Wand anzustoßen, ist der Abstand der die Lagerzapfen aufnehmenden Ausnehmungen entsprechend Anspruch 9 gewählt. Um dennoch in der Gebrauchstellung eine Anlage des Gefäßes am Jochteil des Bügels oder an der Wand zu ermöglichen, schließt sich bei der bevorzugten Ausführungsform an die Ausnehmung eine sich gegen den Jochteil erstreckende Schlitzführung für den Zapfen an. Diese Schlitzführung liegt zweckmäßigerweise auf einem etwas höherem Niveau als die Ausnehmung, damit beim Schwenken des Gefäßes die Lagerzapfen in der Ausnehmung liegen bleiben und sich nicht in die Schlitzführung hineinbewegen. Die zum Einführen der Lagerzapfen erforderlichen Schlitze in den beiden Armen des Bügels münden bei einer bevorzugten Ausführungsform in die Schlitzführung nahe deren an die Ausnehmung anschließendem Ende. Die Handhabung des Gefäßes ist dann besonders einfach.

Die Feststellvorrichtung ist vorzugsweise gemäß Anspruch 12 ausgebildet. Hat das Gefäß einen ebenen Wandbereich, mit dem es am Jochteil des Bügels anliegen kann, ist in der Regel genügend Platz für zwei im Abstand nebeneinander angeordnete Feststellvorrichtungen vorhanden. Durch eine zweite Feststellvorrichtung wird der Aufwand nicht wesentlich erhöht, jedoch die Festlegung des Gefäßes am Bügel merklich verbessert.

Vorzugsweise ist der Riegel der Feststellvorrichtung schwenkbar mit dem ihn tragenden, vorspringenden Teil verbunden, da hierdurch die Betätigung des Riegels sehr einfach und seine Sicherungswirkung sehr gut sind. Um zu verhindern, daß er sich unbeabsichtigt aus seiner Entriegelungsstellung herausbewegt, kann man eine als Anschlag für den Riegel dienende Werkstoffpartie des vorspringenden Teiles vorsehen. Es ist ferner vorteilhaft, die Außenkontur des Riegels und der den Anschlag bildenden Werkstoffpartie so zu wählen, daß dann, wenn der Riegel in der Entrieglungstellung steht, die Außenkontur mit derjenigen des Vorsprunges übereinstimmt. Dies erleichtert das Hindurchführen des Riegels durch eine in der Behälterwand vorgesehenen Öffnung und das Einführen des vorspringenden Teiles in diese Öffnung, welche in ihrer Form an die Außenkontur des vorspringenden Teiles angepaßt ist, damit letzterer den Behälter mit möglichst geringem Spiel festzulegen vermag und der Riegel nur noch das Gefäß gegen eine Bewegung weg vom Jochteil des Bügels zu sichern braucht.

Der Vorsprung der Feststellvorrichtung ist vorzugsweise an einen plattenförmigen Teil eines Kunststoffkörpers angeformt, welcher vor oder hinter dem Jochteil des Bügels an diesem anliegt und mit ihm zusammen an der Wand festgelegt wird. Der Riegel, der vorzugsweise ebenfalls aus Kunststoff besteht, kann dann mittels einer selbstschneidenden und selbstsichernden Schraube, welche in den vorspringenden Teil eingedreht wird, schwenkbar gelagert werden.

Bei einer bevorzugten Ausführungsform ist zusätzlich zu der Feststellvorrichtung eine Sperrvorrichtung vorgesehen, welche den Behälter in einer gekippten, nach unten offenen Stellung zu halten vermag. Diese Sperrvorrichtung kann durch einen vorzugsweise mit dem Kunststoffkörper einstückig ausgebildeten Rastvorsprung gebildet sein, an dem in der gekippten Stellung der Rand des Behälters Anschlag findet, wobei entweder der Rastvorsprung oder der Rand des Behälters soweit elastisch verformbar sein können, daß die Sperrvorrichtung wieder einfach gelöst werden kann.

Im folgenden ist die Erfindung anhand eines in der Zeichnung dargestellten Ausführungsbeispiels im einzelnen erläutert. Es zeigen:

Fig. 1 eine Seitenansicht des Ausführungsbeispiels in der Gebrauchstellung,

Fig. 2 eine Seitenansicht des Ausführungsbeispiels bei gekipptem Behälter,

Fig. 3 eine teilweise aufgebrochen dargestellte Ansicht des Ausführungsbeispiels in der Gebrauchslage,

Fig. 4 einen Ausschnitt aus einer vergrößert dargestellten Ansicht der Feststellvorrichtung,

Fig. 5 eine Draufsicht von oben auf die in Fig. 4 dargestellte Feststellvorrichtung.

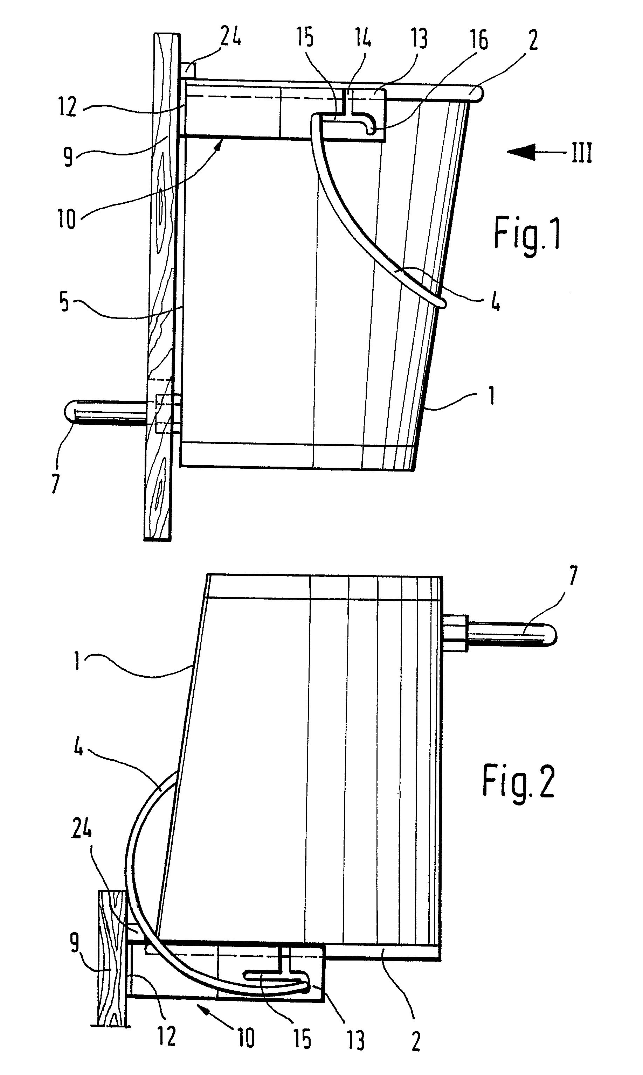

Eine Tränkvorrichtung, insbesondere für Kälber, weist einen aus Kunststoff bestehenden Eimer 1 auf, der nahe seinem oberen, nach außen umgebördelten Rand 2 an diametral liegenden Stellen je eine außen liegende Verdickung hat, in die von außen her die beiden je einen Lagerzapfen 3 bildenden Endabschnitte eines Metallbügels 4 eingreifen. Wie insbesondere Fig. 1 zeigt, ist ein Teilbereich der konischen Wand des Eimers 1 durch eine ebene Platte 5 ersetzt. Im Bereich dieser Platte 5 fehlt der Rand 2. Nahe dem unteren Ende der Platte 5 ist diese mit einer Bohrung für eine dichte Durchführung eines Rohres 6 versehen, an dessen nach außen weisendes Ende sich ein aus Kunststoff oder Gummi bestehender Saugzapfen 7 anschließt. Das innere, nach unten abgewinkelte Ende des Rohres 6 endet in geringem Abstand vom Boden 8 des Eimers 1.

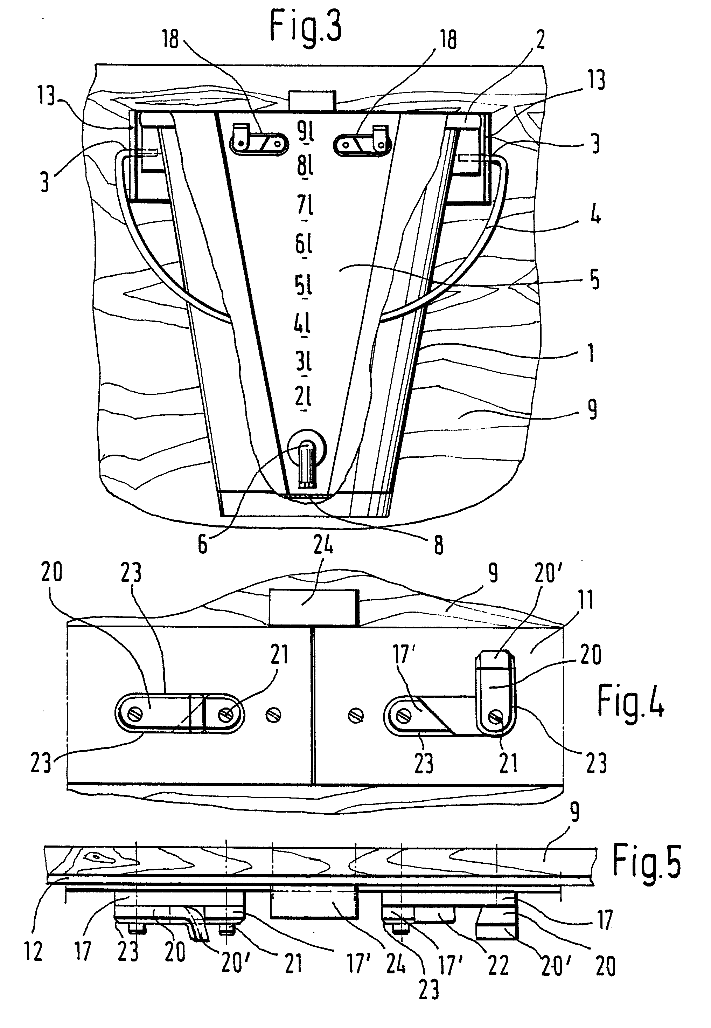

Eine Haltevorrichtung für den Eimer 1 weist einen Bügel 10 auf, der aus zwei hochkant angeordneten, spiegelbildlich gleich ausgebildeten, winkelförmigen Blechteilen besteht. Der ebene Jochteil 11 des Bügels 10 hat deshalb, wie Fig. 4 zeigt, in der Mitte eine Trennfuge. Die Haltevorrichtung weist ferner eine aus Kunststoff bestehende Platte 12 auf, deren Außenkontur an diejenige des Jochteils 11 angepaßt ist. Diese Platte 12 liegt im Ausführungsbeispiel an der der Wand 9 zugekehrten Seite des Jochteiles 11 an, könnte aber auch an der der Wand 9 abgekehrten Seite des Jochteiles 11 anliegen. Mittels nicht dargestellter Schrauben sind der Jochteil 11 und die Platte 12 fest mit der Wand 9 verbunden, wobei der obere und untere Rand beider Teile horizontal verläuft. Vom Jochteil 11 aus erstrecken sich die beiden Schenkel 13 des Bügels 10 von der Wand 9 weg. Die Länge dieser Schenkel 13 ist etwas größer als der halbe Durchmesser des Eimers 1, gemessen am Rand 2 von der Platte 5 zur gegenüberliegenden Seite. Ferner ist der Abstand der Schenkel 13 im Bereich ihrer zueinander parallel verlaufenden Endabschnitte nur geringfügig größer als der Durchmesser des Eimers 1, gemessen in Richtung der Lagerzapfen 3, wie dies Fig. 3 erkennen läßt.

In einem Abstand von dem sich an den Jochteil 11 anschließenden Schenkelende sind beide Schenkel 13 mit einem von ihrem oberen Rand her gegen den unteren Rand hin verlaufenden Einführungsschlitz 14 für die Lagerzapfen 3 versehen. Dieser Einführungsschlitz 14 mündet in einen in Schenkellängsrichtung verlaufenden Führungsschlitz 15, der sich so weit gegen den Jochteil 11 hin erstreckt, daß die Platte 5 in Anlage an den Jochteil 11 gebracht werden kann. In der entgegengesetzten Richtung erstreckt sich der Führungsschlitz 15 nur wenig über den Einführungsschlitz 14 hinaus und geht dann in eine tiefer liegende Ausnehmung 16 über. Der Abstand der Ausnehmung 16 von der Wand 9 ist so groß, daß, wie Fig. 2 zeigt, sich der Rand 2 des Eimers 1 noch in einem gewissen Abstand von der Wand 9 befindet.

An die Platter 12 sind zwei Vorsprünge 17 angeformt, die symmetrisch zu der mittig liegenden Trennfuge des Jochteils 11 angeordnet sind und sich in Längsrichtung des Jochteils erstrecken, wobei die obere und untere Begrenzungsfläche parallel zueinander liegen. Die einander zugekehrten sowie die einander abgekehrten Enden sind halbzylindrisch abgerundet. Diese Vorsprünge 17 durchdringen korrespondierend ausgebildete Ausnehmungen des Jochteils 11 und stehen über dessen der Wand 9 abgekehrte Seite in einem der Dicke der Platte 5 entsprechenden Maße über. Die PLatte 5 ist nahe ihrem oberen Rand ebenfalls mit zwei korrespondierenden Durchbrüchen 18 versehen, in die die Vorsprünge 17 praktisch spielfrei eingreifen, wenn die Platte 5 am Jochteil 11 anliegt, der Eimer 1 sich also in seiner Gebrauchslage befindet. Dabei ist der Boden 19 des Eimers 1 leicht gegen die Wand 9 hin geneigt, so daß der Inhalt des Eimers 1 nahezu vollständig am Saugzapfen 3 entnommen werden kann, welcher durch eine Aussparung in der Wand 9 hindurchgreift und in ausreichendem Maße über die vom Eimer 1 abgekehrte Fläche der Wand 9 übersteht.

An der Stirnfläche beider Vorsprünge 17 liegt je ein Schwenkriegel 20 an, der drehbar auf einer in den Vorsprung 17 nahe dessen dem anderen Vorsprung abgekehrtem Ende eindringenden, selbstschneidenden und selbstsichernden Schraube 21 gelagert ist. In seiner in Fig. 4 links dargestellten Entriegelungsstellung deckt sich der Schwenkriegel 20 vollständig mit dem Vorsprung 17. Um zu verhindern, daß der Schwenkriegel 20 ungewollt aus dieser Schwenkstellung sich herausbewegen kann, ist der Vorsprung 17 in dem dem anderen Vorsprung 17 benachbarten Endabschnitt um die Dicke des Schwenkriegels 20 verlängert. Diese Materialpartie 17' bildet eine in die Schwenkbahn des Schwenkriegels 20 ragende Anschlagfläche 22, an der der Schwenkriegel in der Entriegelungsstellung anliegt. In dieser Stellung ergänzen sich der Schwenkriegel 20 und die Materialpartie 17' zu einem Außenprofil, daß demjenigen des Vorsprunges 17 entspricht. Um das Einführen der beiden Vorsprünge 17 und ihrer Schwenkriegel 20 in die Durchbrüche 18 des Eimers 1 zu erleichtern, sind die Materialpartie 17' und der Schwenkriegel 20 mit einer Schrägfläche 22 oder Anfasung versehen. Die Handhabung des Schwenkriegels 20 wird durch einen abgebogenen, vom Vorsprung 17 wegweisenden Endabschnitt 20' erleichtert.

Um den Eimer 1 in die Gebrauchslage zu bringen, brauchen nur die beiden Lagerzapfen 3 in die Einführungsschlitze 15 eingeführt und dann in den Führungsschlitzen 15 gegen die Wand 9 verschoben zu werden. Gegen Ende dieser Verschiebebewegung durchdringen die beiden in ihrer Endriegelungsstellung stehenden Schwenkriegel 20 die Druchbrüche 18, und die beiden Vorsprünge 17 greifen in diese Durchbrüche ein. Befindet sich die Platte 5 in Anlage am Jochteil 11, dann lassen sich die beiden Schwenkriegel 20 in die in Figur 4 rechts dargestellte Verriegelungsstellung - schwenken, in denen sie die Platte 5 in Anlage am Jochteil 11 halten.

Um einen sich im Eimer 1 eventuell noch befindenden Flüssigkeitsrest bequem ausgießen zu können, werden die beiden Schwenkriegel 20 in die in Fig. 4 links dargestellte Entriegelungsstellung gebracht. Nun wird der Eimer 1 von der Wand 9 so weit wegbewegt, daß die beiden Lagerzapfen 3 in die Ausnehmungen 16 einfallen. Jetzt kann der Eimer 1 gekippt und in der in Fig. 2 dargestellten Kipplage, in der der Rand 2 sich unten befindet, festgehalten werden. Hierzu ist an die Platte 5 mittig ein wie die Vorsprünge 17 von ihr abstehender Rastkörper 24 angeformt, welcher den Rand 2 in der in Fig. 2 dargestellten Lage des Eimers übergreift. Dadurch ist der Rand 2 des Eimers 1 zwischen den Vorsprüngen 17 und dem Rastkörper 24 festgehalten. Die elastische Nachgiebigkeit des Randes 2 genügt, um den Eimer 1 im Uhrzeigersinn bei Blickrichtung gemäß Fig. 2 außer Eingriff mit dem Rastkörper 24 zu bringen.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1. Tränkeinrichtung für Tiere, insbesondere Kälber oder dgl., mit einem Gefäß, einem Saugzapfen und einer letzteren in der Gebrauchstellung zu halten vermögenden Haltevorrichtung, die mit einer Wand oder dgl. verbindbar ist, dadurch **gekennzeichnet**, daß das Gefäß (1), an dem der Saugzapfen (7) festgelegt ist, um eine zumindest im wesentlichen horizontale Achse schwenkbar in der Haltevorrichtung (10 bis 16) gelagert und mittels einer lösbaren Feststellvorrichtung (17, 20) gegen ein Schwenken gesichert in der Gebrauchsstellung gehalten ist.

2. Tränkeinrichtung nach Anspruch 1, dadurch **gezeichnet**, daß die Haltevorrichtung (10 bis 16) einen Bügel (10) aufweist, dessen Jochteil (11) an der Wand (6) oder dgl. befestigbar ist und dessen beide von der Wand (6) abstehende Schenkel (13) das Gefäß (1) zwischen sich aufnehmen und tragen.

3. Tränkeinrichtung nach Anspruch 2, dadurch **gekennzeichnet**, daß das Gefäß (1) zwei gleichachsig und diametral angeordnete, nach außen abstehende Lagerzapfen (3) und die Schenkel (13) je eine nach oben offene Ausnehmung (16) aufweisen, die zwei miteinander fluchtende Lagerstellen für die Lagerzapfen (3) bilden.

4. Tränkeinrichtung nach Anspruch 3, dadurch **gekennzeichnet** , daß die Lagerzapfen (3) durch Abschnitte eines am Gefäß (1) vorgesehenen Tragbügels (4) gebildet sind.

5. Tränkeinrichtung nach einem der Ansprüche 1 bis 4, dadurch **gekennzeichnet**, daß das Gefäß ein Eimer (1) ist.

6. Tränkeinrichtung nach Anspruch 5, dadurch **gekennzeichnet**, daß der Eimer (1) einen ebenen Wandbereich (5) aufweist.

7. Tränkeinrichtung nach einem der Ansprüche 2 bis 6, dadurch **gekennzeichnet**, daß der Bügel (10) aus einer hochkant angeordneten, metallischen Schiene besteht.

8. Tränkeinrichtung nach Anspruch 7, dadurch **gekennzeichnet**, daß der Bügel (10) aus zwei spiegelbildlich gleich ausgebildeten, L-förmigen Stanzteilen besteht, von denen jeder einen der Schenkel (13) und die Hälfte des Jochteiles (11) bildet.

9. Tränkeinrichtung nach einem der Ansprüche 3 bis 8, dadurch **gekennzeichnet**, daß der Abstand der Ausnehmungen (16) von dem sich an den Jochteil anschließenden Schenkelende größer ist als die größte Erstreckung des Behälters (1) von der durch die Lagerzapfen (3) definierten und lotrecht auf dem Behälterboden stehenden Ebene gegen die dem Jochteil (11) zugekehrte Behälteraußenkontur.

10. Tränkeinrichtung nach Anspruch 9, dadurch **gekennzeichnet**, daß sich an die Ausnehmungen (16) gegen das mit dem Jochteil (11) verbundene Schenkelende hin je ein Führungsschlitz (15) für die Lagerzapfen (3) erstreckt.

11. Tränkeinrichtung nach Anspruch 10, dadurch **gekennzeichnet**, daß der Führungsschlitz (15) auf einem etwas höheren Niveau liegt als die Ausnehmung (16).

12. Tränkeinrichtung nach einem der Ansprüche 1 bis 11, dadurch **gekennzeichnet**, daß die Feststellvorrichtung (17, 20) wenigstens einen gegen das Gefäß (1) hin vorspringenden und wenigstens einen nahe dem oberen Rand (2) des Gefäßes (1) vorgesehenen Durchbruch (18) zu durchdringen vermögenden Teil (17, 17') aufweist,

der einen Riegel (20) trägt, welcher in seiner Sperrstellung an der Innenseite der Wand des Behälter (1) anliegt.

13. Tränkeinrichtung nach Anspruch 12, dadurch **gekennzeichnet**, daß der Riegel (20) und/oder der vorspringende Teil (17, 17') gegen ihre freie Stirnseite hin angefast oder keilförmig verjüngt sind.

14. Tränkeinrichtung nach Anspruch 12 oder 13, dadurch **gekennzeichnet**, daß der Riegel (20), vorzugsweise mittels einer Schraube, schwenkbar am vorspringenden Teil (17) gelagert ist.

15. Tränkeinrichtung nach Anspruch 14, dadurch **gekennzeichnet**, daß der Riegel (20) im Bereich seines freien Endabschnittes abgeschrägt ist und in seiner Entriegelungsstellung an einer korrespondierend abgeschrägten Werkstoffpartie (17') des vorspringenden Teils (17) anliegt und daß diese Werkstoffpartie (17') den in seiner Entriegelungsstellung stehenden Riegel zu einer Außenkontur ergänzt, die gleich der Außenkontur des vorspringenden Teiles (17) ist.

16. Tränkeinrichtung nach einem der Ansprüche 1 bis 15, dadurch **gekennzeichnet**, daß die Haltevorrichtung (10 bis 16) zusätzlich zu dem metallischen Bügel (10) einen am Jochteil (11) des Bügels (10) anliegenden und zusammen mit diesem an der Wand (9) festzulegenden Kunststoffkörper (12) aufweist, an den jeder der vorgesehenen, vorspringenden Teile (17) angeformt ist.

17. Tränkeinrichtung nach einem der Ansprüche 1 bis 16, **kennzeichnet** durch eine den Behälter (1) in einer gekippten, nach unten offenen Stellung haltenden Sperrvorrichtung (24).

18. Tränkeinrichtung nach Anspruch 17, dadurch **gekennzeichnet**, daß die Sperrvorrichtung als eine an der Wand (9) festzulegende, mit dem Rand (2) des Behälters (1) zusammenwirkende Rastvorrichtung (24) ausgebildet ist.

19. Tränkeinrichtung nach Anspruch 18, dadurch **gekennzeichnet**, daß die Rastvorrichtung einen vorspringenden Rastkörper (24) aufweist.

20. Tränkeinrichtung nach Anspruch 19, dadurch **gekennzeichnet**, daß der vorspringende Rastkörper (24) einstückig mit dem Kunststoffkörper (12) ausgebildet ist.

Fig.1

Fig.2

# Fig.3

18  18  2  13

13

3  3

9l
8l
7l
6l
4
5l  5
4l
1
3l
2l  9

6  24  8

# Fig.4

20  23  9  20'  11

21  17'  20

23  23  23

21

# Fig.5

9

17

12  17  23  20  20'  21  17'  24  17'  22  20'  20

23